# EUROPÄISCHE PATENTSCHRIFT

(11) **EP 3 259 485 B1**
(45) Veröffentlichungstag und Bekanntmachung des Hinweises auf die Patenterteilung: **05.12.2018**
(21) Anmeldenummer: 16707620.7
(22) Anmeldetag: 26.01.2016
(51) Int. Cl.: F16D 13/56

(54) **KUPPLUNGSEINRICHTUNG**
CLUTCH SYSTEM
DISPOSITIF D'EMBRAYAGE

(30) Priorität: 16.02.2015 DE 102015202730
(43) Veröffentlichungstag der Anmeldung: 27.12.2017
(73) Patentinhaber: Schaeffler Technologies AG & Co. KG, 91074 Herzogenaurach (DE)
(72) Erfinder: CHAMBRION, Martin, 67150 Erstein (FR); RUF, Johannes, 77815 Bühl (DE)
(86) Internationale Anmeldenummer: PCT/DE2016/200043
(87) Internationale Veröffentlichungsnummer: WO 2016/131450

(56) Entgegenhaltungen:
- DE-A1-102014 203 954
- DE-A1-102014 204 001

## Beschreibung

Die Erfindung betrifft eine Kupplungseinrichtung. Insbesondere betrifft die Erfindung eine Kupplungseinrichtung mit einer automatischen Anpresskraftverstärkung.

Eine Kupplungseinrichtung, beispielsweise für ein Motorrad, umfasst erste und zweite Reibelemente, die axial abwechselnd angeordnet sind. Die ersten Reibelemente greifen drehmomentschlüssig und axial verschiebbar in einen Außenlamellenträger und die zweiten Reibelemente entsprechend in einen Innenlamellenträger ein. Werden die Reibelemente in axialer Richtung zusammengepresst, so kann ein Drehmoment zwischen der Eingangsseite und der Ausgangsseite übertragen werden. Die Eingangsseite kann insbesondere von einem Verbrennungsmotor angetrieben werden.

Um die Anpresskraft zu verstärken, beispielsweise zur Übertragung großer Drehmomente oder um die Kupplungseinrichtung mit weniger Reibelementen oder einem geringeren Durchmesser zu dimensionieren, kann eine Anpresskraftverstärkung verwendet werden, die ein schraubenförmiges Federelement umfasst. Das Federelement ist so in der Kupplungseinrichtung angebracht, dass es bei Schleifen der Kupplung um die Drehachse auf Schub belastet wird, sodass eine axiale Kraft bereitgestellt wird, die zur Verstärkung der Anpresskraft auf die Reibelemente verwendet werden kann. Die Kupplung kann so relativ leicht betätigt werden und trotzdem relativ große Drehmomente übertragen. Dies kann insbesondere bei einer mittels Hand- oder Fußbetätigung zu schließenden Kupplung an einem Motorrad vorteilhaft sein.

WO 2014139526 oder DE102014204001 zeigt eine derartige Kupplungseinrichtung. Der Erfindung liegt die Aufgabe zugrunde, eine verbesserte Kupplungseinrichtung mit Anpresskraftverstärkung bereitzustellen. Die Erfindung löst diese Aufgabe mittels einer Kupplungseinrichtung mit den Merkmalen des unabhängigen Anspruchs. Unteransprüche geben bevorzugte Ausführungsformen wieder.

Eine Kupplungseinrichtung umfasst einen Innenlamellenträger und einen Außenlamellenträger, die um eine Drehachse drehbar gelagert sind, ferner ein erstes Reibelement, das drehmomentschlüssig und axial verschiebbar am Innenlamellenträger befestigt ist, ein zweites Reibelement, das drehmomentschlüssig und axial verschiebbar am Außenlamellenträger befestigt ist, und eine Betätigungseinrichtung zur Bereitstellung eines axialen Anpressdrucks auf die Reibelemente, um ein Drehmoment zwischen dem Innenlamellenträger und dem Außenlamellenträger zu übertragen. Darüber hinaus ist ein Federelement vorgesehen, das sich schraubenförmig um die Drehachse erstreckt, zur Verstärkung des axialen Anpressdrucks in Abhängigkeit eines zwischen dem Innenlamellenträger und dem Außenlamellenträger übertragenen Drehmoments. Der Anpressdruck wird verstärkt, wenn das Federelement entlang seiner Erstreckung in Zugbelastung steht.

Anders als in bekannten Ausführungsformen, bei denen die Anpresskraft verstärkt wird, wenn das Federelement auf Schub belastet, also entlang seiner Erstreckungsrichtung gestaucht wird, kann das Federelement durch die Umkehrung der Beanspruchsrichtung davor geschützt werden, zu knicken. Außerdem kann das Federelement in Zugrichtung eine höhere Kraft als in Schubrichtung aufnehmen, sodass die Verstärkung der Anpresskraft erhöht sein kann. Der Verstärkungseffekt ("Boost") kann so vergrößert sein.

Bevorzugterweise ist ein Nabenelement vorgesehen, das mittels des Federelements drehmomentschlüssig mit dem Innenlamellenträger verbunden ist, und das eine axiale Anlage für eines der Reibelemente bildet, wobei sich das Federelement zwischen dem Nabenelement und einer Anpressplatte erstreckt, die axial am anderen Reibelement anliegt, sodass die Reibelemente zwischen der Anpressplatte und der Anlage zusammengepresst werden können.

So kann auf einfache Weise die Zugbelastung des Federelements in eine axiale Kraft umgewandelt werden, die die Reibelemente aneinanderpresst.

In einer ersten Variante ist der Innenlamellenträger mittels eines axialen Sicherungselements an der Anpressplatte angebracht. Dadurch können sich Vorteile bei der Herstellung oder Montage der Kupplungseinrichtung ergeben.

In einer Variante ist der Innenlamellenträger mittels einer gemeinsamen Nietverbindung mit der Anpressplatte und einem Ende des Federelements verbunden. Ein axiales Sicherungselement kann dadurch entfallen. Die Kupplungseinrichtung kann dadurch kostengünstiger hergestellt werden. Außerdem kann erzwungen werden, dass die Kupplungseinrichtung als separat handhabbare Einheit ausgebildet ist, die leicht an einem Antriebsstrang, insbesondere eines Kraftfahrzeugs wie eines Motorrads, angebracht werden kann.

Es ist weiterhin bevorzugt, dass das Nabenelement einen radialen Vorsprung aufweist, um in Umfangsrichtung in einer Anlagefläche des Innenlamellenträgers einzugreifen, um eine Druckbelastung des Federelements zu begrenzen. Dadurch kann erreicht werden, dass eine Verringerung der axialen Anpresskraft auf die Reibelemente verhindert wird. Die Verringerung kann sich beispielsweise ergeben, wenn das Drehmoment zwischen dem Innenlamellenträger und dem Außenlamellenträger in umgekehrter Richtung übertragen wird. Diese Situation kann entstehen, wenn sich ein Kraftfahrzeug, in dessen Antriebsstrang die Kupplungseinrichtung eingebaut ist, im Schiebebetrieb befindet, sodass der Antriebsmotor zur Verzögerung des Kraftfahrzeugs wirkt.

Die Druckbelastung wird bevorzugterweise auf einen Wert ≤ 0 begrenzt. Dadurch kann verhindert werden, dass das Federelement einer Knickbelastung ausgesetzt wird. Außerdem kann die Verringerung der axialen Anpresskraft auf die Reibelemente ausgeschaltet werden. Ferner kann verhindert werden, dass das Federelement abwechselnd Druck- und Zugbelastungen ausgesetzt ist, die seine Lebensdauer herabsetzen könnten.

In einer Ausführungsform ist ein Ende des Federelements begrenzt in Umfangsrichtung beweglich mit der Anpressplatte verbunden, um die Verstärkung der Anpresskraft zu begrenzen. Die begrenzte Beweglichkeit um die Drehachse kann beispielsweise nach Art einer Kulissenführung ermöglicht werden. Diese Ausführungsform ist insbesondere in Kombination mit dem oben erwähnten radialen Vorsprung vorteilhaft, um die Verringerung der axialen Anpresskraft bei Schubbelastung des Federelements zu verhindern.

Die Beweglichkeit des Federelements in Umfangsrichtung kann so gewählt sein, dass ein Stauchen des Federelements verhindert wird.

Der Außenlamellenträger kann mit einer Primärverzahnung verbunden und zum Antrieb durch einen Antriebsmotor eingerichtet sein. Der Antriebsmotor kann insbesondere einen Verbrennungsmotor, bevorzugterweise einen Hubkolben-Verbrennungsmotor, umfassen.

Allgemein können auch mehrere erste und zweite Reibelemente vorgesehen sein, die in axialer Richtung abwechselnd angeordnet sind. Die obigen Aussagen bezüglich des ersten und des zweiten Reibelements gelten dann übertragen auf einander entgegengesetzte axiale Enden des Pakets aus abwechselnd angeordneten ersten und zweiten Reibelementen. Die Kupplungseinrichtung kann insbesondere dazu eingerichtet sein, in einem Flüssigkeitsbad, insbesondere einem Ölbad, zu laufen.

Die Erfindung wird nun mit Bezug auf die beigefügten Figuren genauer beschrieben, in denen:
- Figur 1: eine Kupplungseinrichtung mit Anpressverstärkung;
- Figur 2: eine Kupplungseinrichtung in einer weiteren Ausführungsform; und
- Figur 3: eine Kupplungseinrichtung in noch einer weiteren Ausführungsform darstellt.

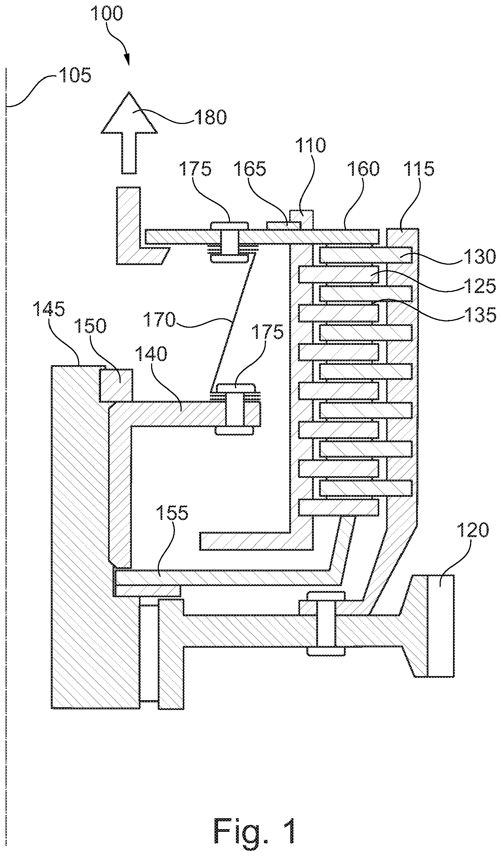

Figur 1 zeigt eine Kupplungseinrichtung 100, die insbesondere zum Einsatz in einem Kraftfahrzeug wie einem Motorrad eingerichtet ist. Um eine Drehachse 105 sind ein Innenlamellenträger 110 und ein Außenlamellenträger 115 drehbar angeordnet. Der Außenlamellenträger 115 kann eine Eingangsseite der Kupplungseinrichtung 100 bilden; in der dargestellten Ausführungsform ist der Außenlamellenträger 115 mit einer Primärverzahnung 120 verbunden, die zum Eingriff mit einem Zahnrad auf einer Abtriebswelle eines Verbrennungsmotors eingerichtet sein kann. In einem Bereich radial zwischen dem Innenlamellenträger 110 und dem Außenlamellenträger 115 sind erste Reibelemente 125 und zweite Reibelemente 130 in axialer Richtung alternierend angeordnet. Die Zahl der Reibelemente 125, 130 beträgt wenigstens zwei und ist üblicherweise eine gerade Zahl. Optional kann eines der Reibelemente 125, 130 einen Reibbelag 135 tragen. Die ersten Reibelemente 125 sind drehmomentschlüssig und axial verschiebbar am Innenlamellenträger 110 und die zweiten Reibelemente 130 drehmomentschlüssig und axial verschiebbar am Außenlamellenträger 115 angebracht. Die Verbindung erfolgt üblicherweise jeweils mittels einer Verzahnung. Radial innerhalb des Innenlamellenträgers 110 ist ein Nabenelement 140 vorgesehen, das eine Ausgangsseite der Kupplungseinrichtung 100 darstellen kann. Das Nabenelement 140 ist in der vorliegenden Ausführungsform drehmomentschlüssig mit einer Welle 145 verbunden. Ein Sicherungselement 150, das beispielsweise als Sicherungsmutter ausgeführt sein kann, begrenzt die Position des Nabenelements 140 an der Welle 145 in einer Richtung. Ein Anlageelement 155 ist axial zwischen dem Nabenelement 140 und einem Absatz an der Welle 145 angebracht und dient als axialer Anschlag an einem axialen Ende des Stapels erster Reibelemente 125 und zueinander Reibelemente 130. An der anderen axialen Seite liegt eine Anpressplatte 160, die drehmomentschlüssig und axial verschiebbar am Innenlamellenträger 110 angebracht ist. Auch hier erfolgt die Verbindung bevorzugterweise mittels einer Verzahnung. Ein Sicherungselement 165, beispielsweise ein Sicherungsring, eine Ringfeder oder eine Klammer, kann vorgesehen sein, um die Anpressplatte 160 unverlierbar in einer axialen Richtung am Innenlamellenträger 110 zu halten.

Zwischen der Anpressplatte 160 und dem Nabenelement 140 ist ein Federelement 170 angebracht, das sich schraubenförmig um die Drehachse 105 erstreckt. Das Federelement 170 wird auch Blattfeder genannt. In einer Ausführungsform sind mehrere Federelemente 170 auf einem Umfang um die Drehachse 105 verteilt angeordnet. Ein erstes Ende des Federelements 170 ist mittels einer Niete 175 an der Anpressplatte 160 befestigt und ein zweites Ende mittels einer weiteren Niete 175 am Nabenelement 140.

Das Federelement 170 steht unter einer axialen Vorspannung, sodass die Anordnung erster und zweiter Reibelemente 125, 130 zunächst axial zusammengepresst wird und die Kupplung 100 geschlossen ist. Zum Öffnen der Kupplung 100 wirkt eine Betätigungseinrichtung 180, die in Figur 1 nur symbolisch als Pfeil dargestellt ist, eine Betätigungskraft, die in der Darstellung von Figur 1 nach oben gerichtet ist, auf die Anpressplatte 160 aus. Die Reibelemente 125, 130 werden dadurch axial entlastet und die Kupplung 100 trennt.

Lässt die Betätigungskraft nach, zieht das Federelement 170 die Reibelemente 125, 130 so weit aneinander, dass sie in Reibschluss gelangen. Dreht sich dabei der Außenlamellenträger 115 gegenüber dem Innenlamellenträger 110, so wird das Federelement 170 um die Drehachse 105 auf Zug belastet, wodurch das Federelement 170 die Anpressplatte 160 axial in Richtung des Nabenelements 140 zieht. Dieser Vorgang kann beispielsweise beim Anfahren eines Kraftfahrzeugs, in dessen Antriebsstrang die Kupplungseinrichtung 100 eingesetzt ist, ablaufen. Die in der geschlossenen Kupplung 100 auf die Anordnung erster und zweiter Reibelemente 125, 130 wirkende axiale Anpresskraft ist somit größer als die Betätigungskraft, die zum Öffnen der Kupplung 100 aufgebracht werden muss. Die zusätzlich wirkende Anpresskraft wird das über die Kupplungseinrichtung 100 übertragene Drehmoment aufgebracht. Dabei kann das gesamte übertragene Drehmoment zur Verstärkung der Anpresskraft ausgenutzt werden.

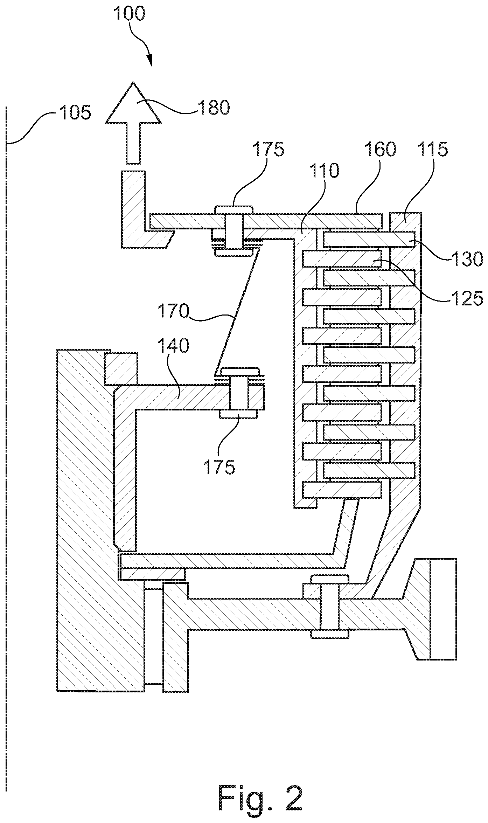

Figur 2 zeigt die Kupplungseinrichtung 100 aus Figur 1 in einer weiteren Ausführungsform. Im Unterschied zur Ausführungsform von Figur 1 ist hier der Innenlamellenträger 110 umgedreht, sodass sein radial nach innen weisender Bund mittels der Niete 175 mit der Anpressplatte 160 und dem Federelement 170 verbunden werden kann. Das Sicherungselement 165 kann dabei entfallen. Die restlichen Elemente entsprechen denen, die oben mit Bezug auf die Ausführungsform von Figur 1 genauer erläutert sind.

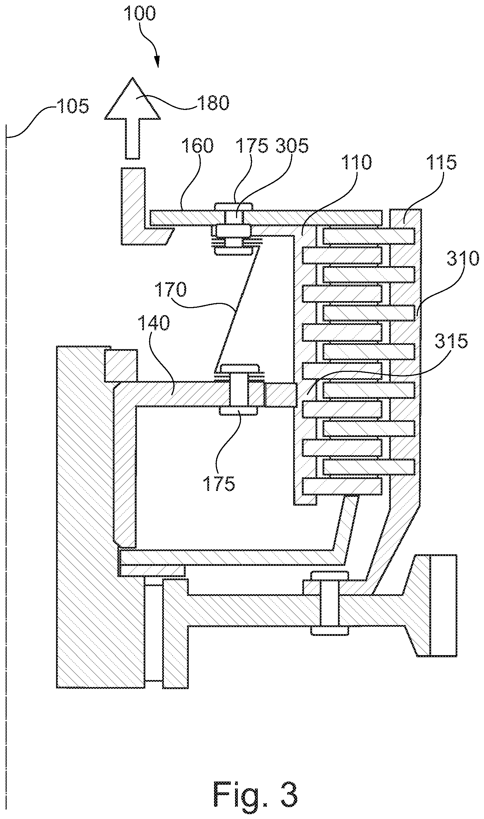

Figur 3 zeigt noch eine weitere Ausführungsform, die auf der Ausführungsform von Figur 2 basiert. Die dargestellte Ausführungsform unterscheidet sich von der von Figur 2 in zwei Aspekten, die getrennt voneinander mit den Ausführungsformen der Figuren 1 und 2 kombinierbar sind.

Ein erstes Aspekt betrifft die Niete 175. In der dargestellten Ausführungsform umfasst die Niete 175 einen Abstandsbolzen 305, der sich durch ein Langloch im Innenlamellenträger 110 erstreckt. Das Langloch erstreckt sich auf einem Umfang um die Drehachse 105, sodass der Innenlamellenträger 110 beweglich gegenüber der Anpressplatte 160 ist, die starr mit dem Federelement 170 verbunden ist. Das Langloch ermöglicht, dass das Federelement in einer Wirkrichtung vollständig entlastet ist, sodass die automatische Reduzierung der Anpresskraft praktisch abgeschaltet ist. Der Verstärkungseffekt des Federelements 170 auf die axiale Anpresskraft auf die erster und zweiter Reibelemente 125, 130 kann dadurch insbesondere im Schubbetrieb unterbunden sein.

Ein zweiter Aspekt betrifft einen radialen Vorsprung 310 am Nabenelement 140, der dazu eingerichtet ist, in Umfangsrichtung an einer Anlagefläche 315 des Innenlamellenträgers 110 anzuliegen. Dabei greift der Vorsprung 310 erst dann in die Anlagefläche 315 ein, wenn der Innenlamellenträger 110 gegenüber dem Nabenelement 140 in eine Richtung verdreht wird, die bewirkt, dass die Zugspannung zwischen den Enden des Federelements 170 null oder kleiner wird. Anders ausgedrückt, verhindert die Anordnung von Vorsprung 310 und Anlagefläche 315 eine Kompression des Federelements 170 entlang seiner Erstreckungsrichtung.

Die beiden Aspekte können in Kombination miteinander dazu verwendet werden, sicherzustellen, dass einerseits das Federelement 170 keiner Schubbelastung ausgesetzt ist und andererseits eine Verringerung einer durch die Betätigungseinrichtung 180 ausgeübten axialen Anpresskraft auf die Anordnung erster und zweiter Reibelemente 125, 130 ausgeschaltet ist.

### Bezugszeichenliste

- 100: Kupplungseinrichtung
- 105: Drehachse
- 110: Innenlamellenträger
- 115: Außenlamellenträger
- 120: Primärverzahnung

- 125: erstes Reibelement
- 130: zweites Reibelement
- 135: Reibbelag

- 140: Nabenelement
- 145: Welle
- 150: Sicherungselement
- 155: Anlageelement
- 160: Anpressplatte
- 165: Sicherungselement

- 170: Federelement
- 175: Niete
- 180: Betätigungseinrichtung

- 305: Abstandsbolzen
- 310: Vorsprung
- 315: Anlagefläche

## Patentansprüche

1. Kupplungseinrichtung (100) mit:
- einen Innenlamellenträger (110) und einen Außenlamellenträger (115), die um eine Drehachse (105) drehbar gelagert sind;
- einem ersten Reibelement (125), das drehmomentschlüssig und axial verschiebbar am Innenlamellenträger (110) befestigt ist;
- einem zweiten Reibelement (130), das drehmomentschlüssig und axial verschiebbar am Außenlamellenträger (115) befestigt ist;
- eine Betätigungseinrichtung (180) zur Bereitstellung eines axialen Anpressdrucks auf die Reibelemente (125, 130), um ein Drehmoment zwischen dem Innenlamellenträger (110) und dem Außenlamellenträger (115) zu übertragen;
- ein Federelement (170), das sich schraubenförmig um die Drehachse (105) erstreckt, zur Verstärkung des axialen Anpressdrucks in Abhängigkeit eines zwischen dem Innenlamellenträger (110) und dem Außenlamellenträger (115) übertragenen Drehmoment,
**dadurch gekennzeichnet, dass**
- der Anpressdruck verstärkt wird, wenn das Federelement (170) entlang seiner Erstreckung in Zugbelastung steht.

2. Kupplungseinrichtung (100) nach Anspruch 1, wobei ein Nabenelement (140) vorgesehen ist, das drehmomentschlüssig mit dem Innenlamellenträger (110) verbunden ist und das eine axiale Anlage (155) für eines der Reibelemente (125, 130) bildet, wobei sich das Federelement (170) zwischen dem Nabenelement (140) und einer Anpressplatte (160) erstreckt, die axial am anderen Reibelement (130, 125) anliegt, sodass die Reibelemente (125, 130) zwischen der Anpressplatte (160) und der Anlage zusammengepresst werden können.

3. Kupplungseinrichtung (100) nach Anspruch 2, wobei der Innenlamellenträger (110) mittels eines axialen Sicherungselements (165) an der Anpressplatte (160) angebracht ist.

4. Kupplungseinrichtung (100) nach Anspruch 2, wobei der Innenlamellenträger (110) mittels einer gemeinsamen Nietverbindung (175) mit der Anpressplatte (160) und einem Ende des Federelements (170) verbunden ist.

5. Kupplungseinrichtung (100) nach einem der Ansprüche 2 bis 4, wobei das Nabenelement (140) einen radialen Vorsprung (305) aufweist, um in Umfangsrichtung in eine Anlagefläche (310) des Innenlamellenträgers (110) einzugreifen, um eine Druckbelastung des Federelements (170) zu begrenzen.

6. Kupplungseinrichtung (100) nach Anspruch 5, wobei die Druckbelastung auf einen Wert ≤ 0 begrenzt wird.

7. Kupplungseinrichtung (100) nach einem der vorangehenden Ansprüche, wobei ein Ende des Federelements (170) begrenzt in Umfangsrichtung beweglich mit der Anpressplatte (160) verbunden ist, um die Verstärkung der Anpresskraft zu begrenzen.

8. Kupplungseinrichtung (100) nach Anspruch 7, wobei die Beweglichkeit so gewählt ist, dass ein Stauchen des Federelements (170) verhindert wird.

9. Kupplungseinrichtung (100) nach einem der vorangehenden Ansprüche, wobei der Außenlamellenträger (115) mit einer Primärverzahnung (120) verbunden und zum Antrieb durch einen Antriebsmotor eingerichtet ist.

10. Kupplungseinrichtung (100) nach einem der vorangehenden Ansprüche, wobei mehrere erste (125) und zweite Reibelemente (130) vorgesehen sind, die in axialer Richtung abwechselnd angeordnet sind.

## Claims

1. Clutch device (100) having:
- an inner disc carrier (110) and an outer disc carrier (115) which are mounted such that they can be rotated about a rotational axis (105);
- a first friction element (125) which is fastened in a torque-locking and axially displaceable manner to the inner disc carrier (110);
- a second friction element (130) which is fastened in a torque-locking and axially displaceable manner to the outer disc carrier (115);
- an actuating device (180) for providing an axial contact pressure onto the friction elements (125, 130), in order to transmit a torque between the inner disc carrier (110) and the outer disc carrier (115);
- a spring element (170) which extends helically about the rotational axis (105), for boosting the axial contact pressure in a manner which is dependent on a torque which is transmitted between the inner disc carrier (110) and the outer disc carrier (115),
**characterized in that**
- the contact pressure is boosted if the spring element (170) is subjected to a tensile load along its extent.

2. Clutch device (100) according to Claim 1, a hub element (140) being provided which is connected in a torque-locking manner to the inner disc carrier (110) and which forms an axial rest (155) for one of the friction elements (125, 130), the spring element (170) extending between the hub element (140) and a pressure plate (160) which bears axially against the other friction element (130, 125), with the result that the friction elements (125, 130) can be pressed together between the pressure plate (160) and the rest.

3. Clutch device (100) according to Claim 2, the inner disc carrier (110) being attached on the pressure plate (160) by means of an axial securing element (165).

4. Clutch device (100) according to Claim 2, the inner disc carrier (110) being connected to the pressure plate (160) and an end of the spring element (170) by means of a common riveted connection (175).

5. Clutch device (100) according to one of Claims 2 to 4, the hub element (140) having a radial projection (305), in order to engage into a bearing face (310) of the inner disc carrier (110) in the circumferential direction, in order to limit a compressive loading of the spring element (170).

6. Clutch device (100) according to Claim 5, the compressive loading being limited to a value of ≤ 0.

7. Clutch device (100) according to one of the preceding claims, an end of the spring element (170) being connected to the pressure plate (160) such that it can be moved to a limited extent in the circumferential direction, in order to limit the boosting of the pressing force.

8. Clutch device (100) according to Claim 7, the movement capability being selected in such a way that a compression of the spring element (170) is prevented.

9. Clutch device (100) according to one of the preceding claims, the outer disc carrier (115) being connected to a primary toothing system (120) and being set up for driving by way of a drive motor.

10. Clutch device (100) according to one of the preceding claims, a plurality of first (125) and second friction elements (130) being provided which are arranged in an alternating manner in the axial direction.

## Revendications

1. Dispositif d'embrayage (100), comprenant :
- un support de disques internes (110) et un support de disques externes (115) qui sont supportés à rotation autour d'un axe de rotation (105) ;
- un premier élément de frottement (125) qui est fixé par liaison de transmission de couple et de manière déplaçable axialement sur le support de disques internes (110) ;
- un deuxième élément de friction (130) qui est fixé par liaison de transmission de couple de manière déplaçable axialement sur le support de disques externes (115) ;
- un dispositif d'actionnement (180) pour fournir une pression de pressage axiale sur les éléments de friction (125, 130), afin de transmettre un couple entre le support de disques internes (110) et le support de disques externes (115) ;
- un élément de ressort (170) qui s'étend sous forme hélicoïdale autour de l'axe de rotation (105) pour amplifier la pression de pressage axiale en fonction d'un couple transmis entre le support de disques internes (110) et le support de disques externes (115),
**caractérisé en ce que**
- la pression de pressage est amplifiée lorsque l'élément de ressort (170) est soumis à une contrainte de traction le long de son étendue.

2. Dispositif d'embrayage (100) selon la revendication 1, dans lequel un élément de moyeu (140) est prévu, lequel est connecté par liaison de transmission de couple au support de disques internes (110) et lequel forme un appui axial (155) pour l'un des éléments de friction (125, 130), l'élément de ressort (170) s'étendant entre l'élément de moyeu (140) et une plaque de pressage (160) qui s'applique axialement contre l'autre élément de friction (130, 125), de telle sorte que les éléments de friction (125, 130) puissent être comprimés entre la plaque de pressage (160) et l'appui.

3. Dispositif d'embrayage (100) selon la revendication 2, dans lequel le support de disques internes (110) est monté au moyen d'un élément de fixation axial (165) contre la plaque de pressage (160).

4. Dispositif d'embrayage (100) selon la revendication 2, dans lequel le support de disques internes (110) est connecté au moyen d'une liaison par rivets commune (175) à la plaque de pressage (160) et à une extrémité de l'élément de ressort (170).

5. Dispositif d'embrayage (100) selon l'une quelconque des revendications 2 à 4, dans lequel l'élément de moyeu (140) présente une saillie radiale (305) afin de s'engager dans la direction périphérique dans une surface d'appui (310) du support de disques internes (110) afin de limiter une contrainte de pression de l'élément de ressort (170).

6. Dispositif d'embrayage (100) selon la revendication 5, dans lequel la contrainte de pression est limitée à une valeur ≤ 0.

7. Dispositif d'embrayage (100) selon l'une quelconque des revendications précédentes, dans lequel une extrémité de l'élément de ressort (170) est connectée de manière déplaçable dans une mesure limitée dans la direction périphérique à la plaque de pressage (160) afin de limiter l'amplification de la force de pressage.

8. Dispositif d'embrayage (100) selon la revendication 7, dans lequel la mobilité est choisie de manière à empêcher un écrasement de l'élément de ressort (170).

9. Dispositif d'embrayage (100) selon l'une quelconque des revendications précédentes, dans lequel le support de disques externes (115) est connecté à une denture primaire (120) et est prévu pour être entraîné par un moteur d'entraînement.

10. Dispositif d'embrayage (100) selon l'une quelconque des revendications précédentes, dans lequel plusieurs premiers (125) et deuxièmes (130) éléments de friction sont prévus, lesquels sont disposés en alternance dans la direction axiale.
